# EUROPEAN PATENT SPECIFICATION

(11) **EP 1 618 622 B1**
(45) Date of publication and mention of the grant of the patent: **22.11.2006**
(21) Application number: 04727161.4
(22) Date of filing: 13.04.2004
(51) Int. Cl.: H01M 8/04

(54) **BUFFER/CONVERTER/DUMPING SYSTEM BETWEEN FUEL CELLS AND PROCESS**
PUFFER-/UMSETZER-/DUMPING-SYSTEM ZWISCHEN BRENNSTOFFZELLEN UND PROZESS
TAMPON/CONVERTISSEUR/SYSTEME DE DECHARGE ENTRE DES PILES A COMBUSTIBLE ET PROCEDE ASSOCIE

(30) Priority: 15.04.2003 NO 20031768
(43) Date of publication of application: 25.01.2006
(73) Proprietor: Eidesvik AS, 5443 Bomlo (NO)
(72) Inventor: SANDAKER, Kjell, N-5555 Forde i Hordaland (NO)
(74) Representative: Siiger, Joergen
(86) International application number: PCT/NO2004/000105
(87) International publication number: WO 2004/105170

(56) References cited:
- EP-A1- 0 782 209
- US-A1- 2002 172 845

## Description

The present invention relates to a system for use of fuel cells in stationary/mobile devices with a stable/unstable load profile and application thereof.

It can be of interest to employ fuel cells as a producer of electric energy or as an energy station in different contexts. Fuel cell installations have many characteristics that make the use of these desirable, for example, because of fuel economy, environmental considerations, utilisation of resources, etc. Installations which can be relevant can be stationary as well as mobile units, they can be permanent installations on land, offshore or onboard ships, or elsewhere. However, these sites are often characterised in that the electric energy load varies to a greater or lesser extent over time. Some installations have partly large load variations over a short time, which can be more or less predictable. Further, the risk or probability for momentary loss of loads, or the wish for a very rapid load increase is also relevant. The size of such installations can vary from a few hundred kW to several tens of MW.

A problem in succeeding with such installations is that it is difficult for the actual fuel cell installation to follow such an unstable load profile. There are chemical-electrical processes taking place and, as a rule, these have a limited load area where they function best. For a good utilisation of fuel cells, they ought to be allowed to operate within those operating conditions they are suited to. This means that fuel cells should only, to a limited extent, be exposed to the actual load variations.

It is known that fuel cells which run on pure hydrogen, so called PEM cells, can be regulated quickly, but these are normally smaller installations of up to a few hundred kW. Pure hydrogen is costly and demands expensive storage facilities that are considered to be high-tech and which, so far, are only developed for rather limited capacities.

So called high temperature cells, which usually run on fuels other than hydrogen, such as for example natural gas, are much less flexible to regulate. It is an advantage if one can use fuel cells that can utilise natural gas or other hydrocarbon compounds as fuel, as this is cheaper.

Fuel cells have many advantages that are known to those skilled in the arts, compared to other devices, especially in the environmental area.

Furthermore, it is also desirable for technical reasons to have high temperature cells. Then, one can, for example, utilise the heat in the waste gases. In other words, it is high temperature cells that can run on natural gas or other gases or hydrocarbon compounds, and that are not dependent on pure hydrogen, which is the most interesting commercially, and it is this type of installation which the invention, primarily, is intended for. It is such cell types that are considered relevant for industrial installations, for operation of ships and offshore installations. The realisation of projects related to such fuel types are hindered in that these cell types are still unsuited to large and "untidy" load variations. By applying the invention, this hindrance is removed.

The invention solves this problem by building/arranging technical systems around a fuel cell installation in such a way that these additional systems, such as buffers, converters and dumping devices, hereafter called additional systems, take care of load variations that the surrounding process demands, and thereby protect the fuel cell installation in such a way that the fuel cell installation can function as a producer of electric energy within the framework and conditions which the installation is designed for. Thereby, the additional systems have a function as a regulating system between energy producer and consumer.

The invention is characterised by the characteristic parts of the independent claims 1 and 7, while alternative solutions are defined by the dependent claims.

With such additional systems, use of fuel cell installations is made possible for applications where there are large and irregular load variations. The arrangement for dumping of energy, preferably in the form of direct current/DC, straight into the water dome of the boiler with the aim of getting rid of surplus energy momentarily, is an essential characteristic of the system. What is special with the invention is that a combination of a number of subsystems/circuits and components together provide characteristics of the system in its entirety, which has advantages that were previously not known. Examples of such subsystems/circuits is: Air-flue gas circuit with turbine/compressor, boiler for heat recovery and additional heating, steam condensation circuit with steam turbine, hydrogen circuit with electrolysis device, hydrogen store and PEM cells, gas circuit with gas store and distribution system, distribution system for electric energy including turbine-driven generator, panels and control system. The number and extent of such systems are adapted in each case dependent on the actual load variations, which are expected in the process/application.

Abbreviations used in this application:

| | |
|---|---|
| MCFC - | Molten Carbonate Fuel Cell |
| SOFC - | Solid Oxide Fuel Cells |
| PEM - | Proton Exchange Membrane cell |
| DC - | Direct Current |

The present invention is a principle solution for how one can construct technical systems with components and subsystems, which in itself are known, and integrate these in connection with, and around, fuel cells in such a way that the fuel cell installation can be operated on its own terms, and with minimal influence and disturbance from the load variation in the surrounding process/consumer system. Furthermore, this additional system, which can be built up more complicated or less complicated, dependent on which installation it shall serve, has properties, characteristics and capacity to meet the requirements which the actual load variations and disturbances of the process demand.

Properties that are part of the invention:
- Fuel cells which are desired to be used for production of electric energy in the context where the load profile can show large variations or disturbances which exceed the limits which the actual fuel cells should be able to cope with, or where it is not desirable that they shall follow, are arranged together with technical systems that have characteristics and capacity to meet the demands in such a way that the fuel cells are not unnecessarily loaded or disturbed in their function of operating durability.
- The buffer systems can be put together in different configurations, according to the characteristics of the actual installation that is to be served.
- The buffer systems can be arranged so that outgoing electric energy production from the installation can be regulated from zero, without the fuel cell installation having to be closed down, to a maximum capacity that can lie considerably higher than the capacity of the fuel cell installation on its own.
- The buffer systems can function as an important part of a regulating system for the whole installation so that:
   o short lasting load variations are handled by the additional system at their own buffer/dumping capacity
   o surplus energy can be led out of the system at very short notice
   o additional energy can be provided at very short notice with the help of the internal characteristics and buffer capacity of the additional systems
- The additional systems can regulate the level of the energy production from the installation within wide limits, which go both below the minimum and above the maximum capacity of the central fuel cell installation.

Examples of an application of the invention can be:
- Instant variations in the need for electric energy are handled by a steam turbine with generator and a steam circuit. This circuit has its own internal buffer capacity.
- A larger momentary load decay in the process can be handled in that a surplus amount of energy, which is expediently regarded to be in the form of electric energy/DC, is dumped straight into the water dome in the boiler, or it can be solved by bypassing steam outside the steam turbine and directly to the condenser and thereby relieving the steam turbine driven generator.
- A request for momentary or very rapid increase of the production of electric energy, for example at start-up of large consumers or in an emergency situation where maximum effect is desired to bring a ship away from a dangerous situation, can, for example, be achieved by:

opening up for increased steam supply to the turbine; igniting gas burner for additional burning in the boiler to increase the steam production; start PEM cells on hydrogen.

All these actions, which can together have a capacity which exceeds the capacity of the high temperature cell, can be put into effect at very short notice, in a matter of seconds actually, without the high temperature cells needing to be influenced.

A load over a longer time that is higher than the capacity of the high temperature cells can be achieved by:
- running PEM cells on hydrogen
- additional firing of the boiler with gas
- additional firing of the boiler with oil
- additional firing of the boiler with another fuel

Longer time at very low or no load can, for example, be solved by:
- producing hydrogen for storage until the store is full
- regulating the high temperature cells down to zero output, but maintaining the temperature by gas firing.

The invention shall now be described more detailed with help of the enclosed figures, in which:
Figure 1 shows examples of schematic, graphic presentations of load variations. The variations can be greater or smaller and can be statistically irregular in shape and time.
Figure 2 shows an example of a schematic, graphic presentation of a load disturbance.
Figure 3 shows an example of a load profile in a fuel cell installation. A schematic picture of possible load variations over time when a ship is in operation.
Figure 4 shows a schematic presentation of an example of a (sub) system with a fuel cell with an air-flue gas circuit.
Figure 5 shows schematically a more developed installation, comprising the subsystem shown in figure 4.
Figure 6 shows schematically a simplified version of an installation to show that simplified versions of additional systems can be utilised.

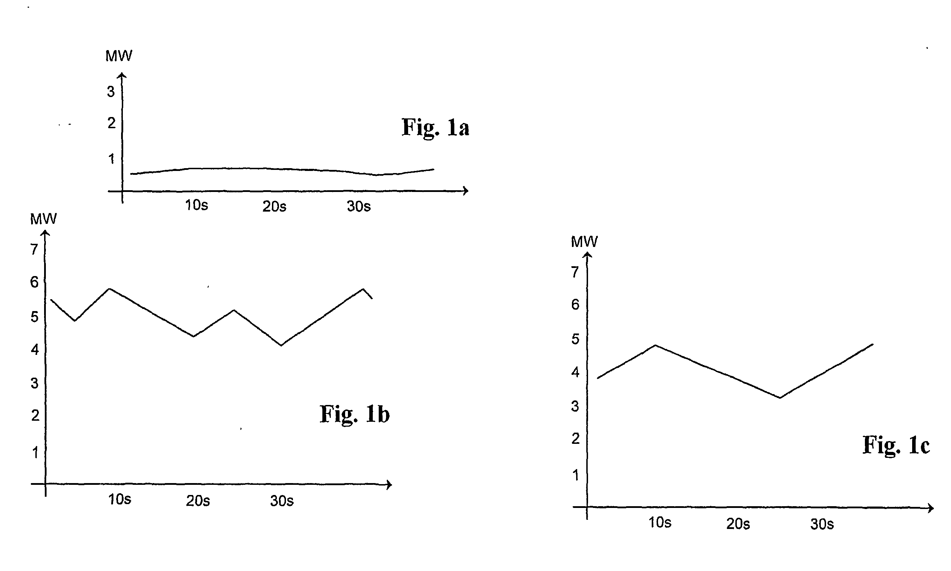

Figure 1a shows a load variation between 300-1000 kW. This can be an example of a ship that is docked, or which is lying still during loading.

Figures 1b and 1c show working situations where one operates within a load range of 3-7 MW or 0.5-5 MW, respectively. The variation in these figures is ±20 % per 5 seconds. The figures show that within these ranges, one can have load variations of ±20 % in 5 seconds. This can, for example, occur when the ship must achieve a required speed, because of weather conditions, or other factors that change the load of the ship.

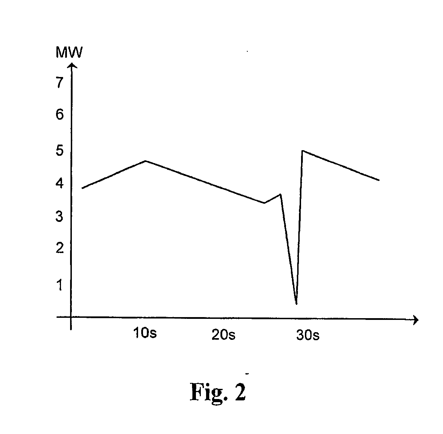

Figure 2 shows an example of a working situation with load variations of ±30 % over 15 seconds, but where incidental large load disturbances of ±90 % over 5 seconds occur. This can be caused by the weather, or other factors.

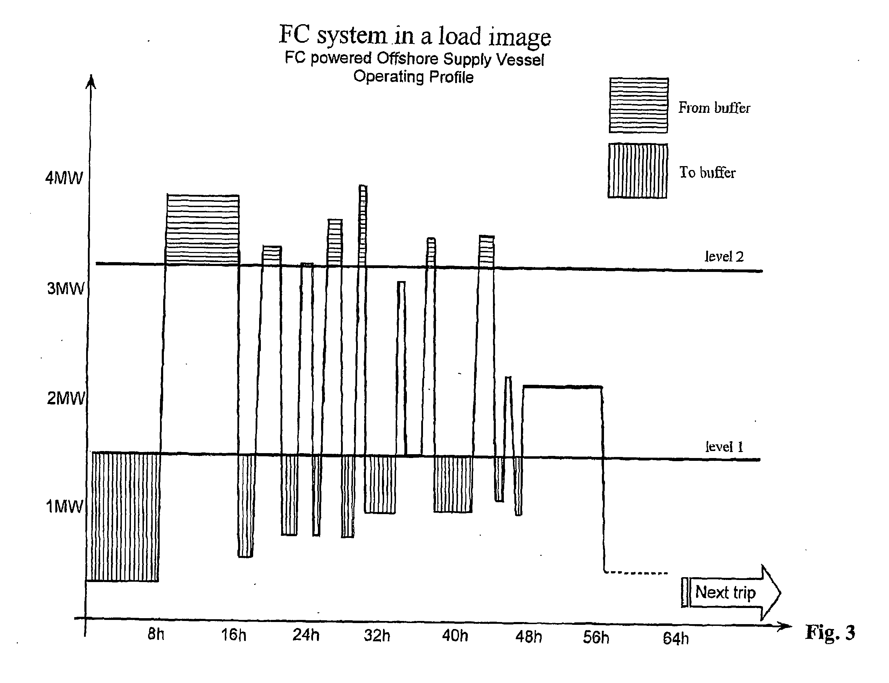

The illustration in figure 3 indicates an example of a load area for the main fuel cell installation, between level 1 and level 2, in this example about 1625 kW-3250 kW. The area between 1625 kW and actual load when this is lower, marked "to buffer", shows surplus energy that is stored. The area above 3250 kW, marked "from buffer", shows energy, which is taken from the surplus, store and applied to the top load. The area between level 1 and level 2 indicates a normal working level for a certain type of fuel cell installation. The fuel cell installation can/should not be loaded outside the area between level 1 and level 2, but because of the system according to the invention around the installation, significant higher effects or significant lower effects can be achieved with the total system than with the fuel cell installation alone, without this being harmful to the fuel cell.

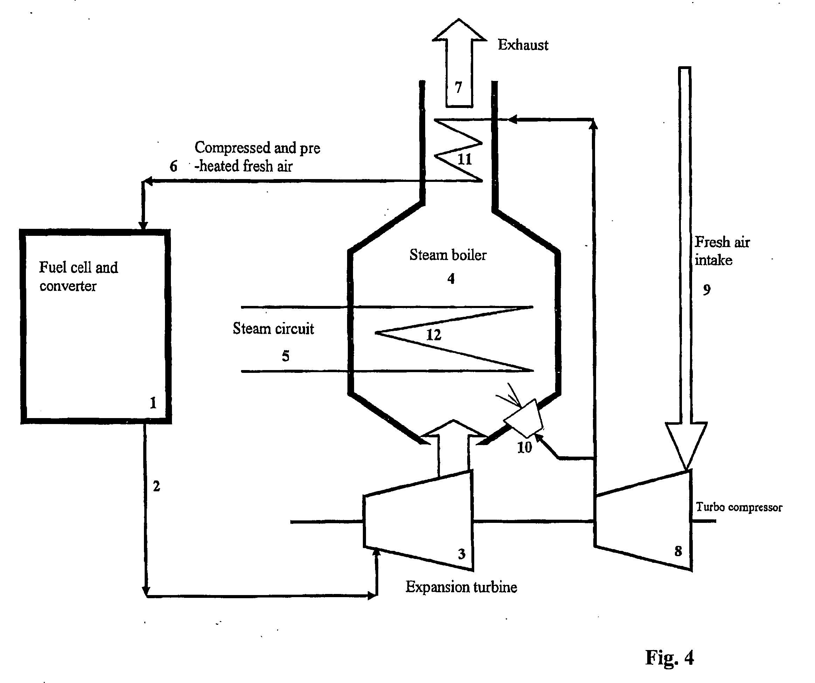

Figure 4 shows an example of an air-flue gas circuit around a fuel cell. This is a relatively simple embodiment of the invention. Surplus energy that is produced and converted in the fuel cell/converter (1) is led by way of the exhaust/outlet (2) and by way of an expansion turbine (3) to a boiler (4) that can function as a buffer or converter. A steam circuit (5) with a heat exchanger (12) is arranged in the boiler to recover heat or pressure which can be used in the rest of the installation onboard the ship. The exhaust from the boiler (4) is vented through an exhaust/outlet (7). Furthermore, the heat in the boiler is used to heat air from the fresh air inlet (9), which is compressed through the turbo compressor (8). The compressed air (6) is preheated in a heat exchanger (11) and led to the fuel cell/converter (1). Furthermore, there is a possibility of additional firing with the help of a nozzle (10).

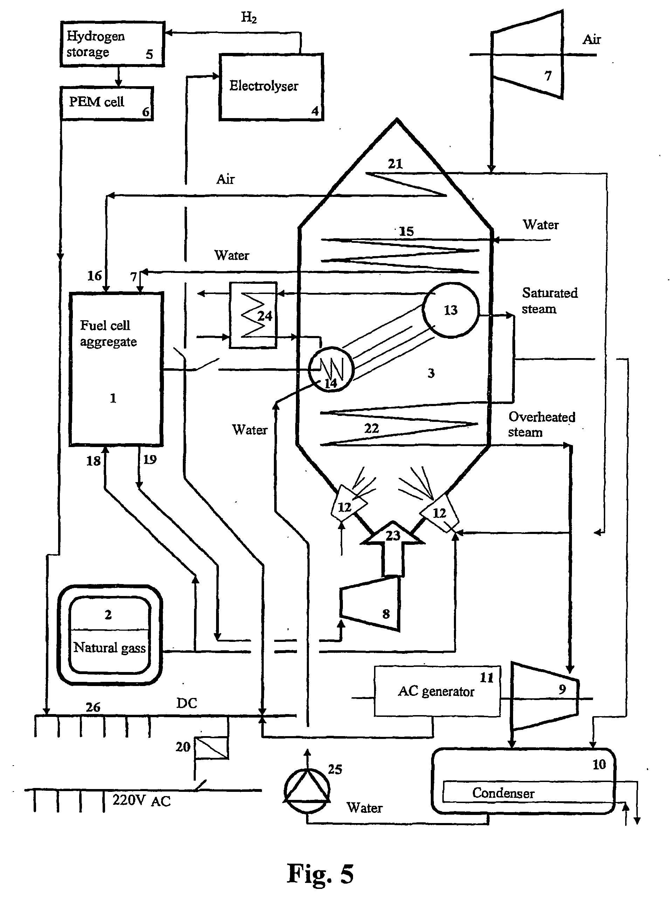

Figure 5 shows an example of the system according to the invention. The system is built around a fuel cell (1) which runs on natural gas that comes from a natural gas store (2) by way of a gas inlet (18). The exhaust gas from the fuel cell (1) is led to a boiler (3) by way of an exhaust (19), an expansion turbine (8), and exhaust inlet (23). The boiler (3) and surrounding systems have the aim of recovery, storage and conversion of energy. The boiler itself stores energy in the form of heat and pressure. A heat exchanger (21) is arranged in the boiler (3) whereby it heats the compressed air that comes from the turbo compressor (7), and which is led into the fuel cell (1) by way of air inlet (16). Furthermore, a heat exchanger (15) is arranged in the boiler (3) whereby water, which is led into the fuel cell (1), is heated.

Furthermore, a water-steam circuit is arranged, which serves for storage and conversion of energy. This circuit comprises a pump (25) for supply of water, a water container with heating element (14) for evaporation of water, a heat exchanger (24) to provide heat to, for example, the central heating onboard the ship, a steam container with outlet (13) for saturated steam to a heat exchanger (22), a pipe for superheated steam which leads to an expansion turbine (9), a condenser (10) to recover water that can be reused in the system. The expansion turbine (9) drives a direct current generator (11) to convert a part of the energy to electricity.

Nozzles (12) are arranged in the boiler (3) for additional firing.

Furthermore, a hydrogen circuit is placed around the fuel cell (1). This circuit is used in the conversion and storage of surplus energy, which can be used when needed later on. Energy from the fuel cell (1) is led to the installation onboard the ship (26), to meet the energy need of the ship. An AC/DC converter (20) converts alternating current to direct current for the same purpose. Further, electricity from the direct current generator (11) is supplied to the installation onboard the ship (26). Surplus energy from the fuel cell (1) is led to an electrolysis device (4) according to need. This electrolysis device forms hydrogen from water by the use of the electric energy supplied from the fuel cell (1). Hydrogen is stored in a hydrogen storage unit (5). When there is a need for more electric energy onboard the ship, hydrogen from the hydrogen storage (5) is used in a PEM cell (6) to generate electric energy. Hydrogen from the hydrogen storage (5) can further be used as a fuel for the fuel cell (1) when needed, or as fuel in another energy converter.

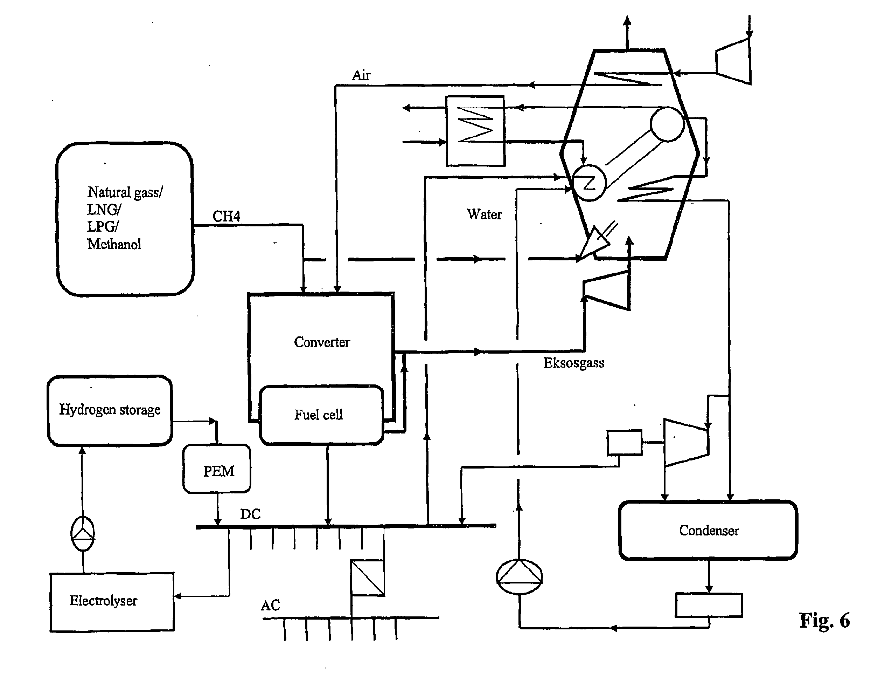

Figure 6 shows a corresponding system to that shown in figure 5. The same components are used, but the circuits are set up in an alternative way.

A complete installation can have several sub-circuits with different functions. The fuel cell can be arranged with one or more of the following connections:
- Natural gas inlet, for example, evaporated gas from the LNG store (Liquefied Natural Gas).
   The gas will normally be delivered having a temperature corresponding to the ambient temperature.
- Water inlet. The water can be preheated or in the form of steam.
- Air inlet. The air is assumed to be preheated. A suitable temperature is chosen. The amount of air is adjusted to the operating situation.
- Exhaust exit.

A turbo charger can be arranged to drive the air-exhaust circuit. The pressure which shall be built up by the turbo charger shall be sufficient to overcome the pressure drop across the reformer/fuel cell, the necessary pressure drop across the driving turbine and the pressure drop across the boiler.

Systems corresponding to those in figures 5 and 6 are examples of embodiments of the present invention. They can, for example, comprise a fuel cell unit (MCFC or SOFC) boiler/heat recovery boiler, hydrogen circuit, LNG circuit with LNG connection, steam-condensate circuit with steam turbine device, LNG or oil burners, air-flue gas circuit, (compressed air) generator which preferably is a turbo compressor, heat exchanger for service heat circuit, electric energy circuit for, among other things, supply of electricity to the consumer system.

The steam circuit drives a steam turbine that drives a DC-generator. The fuel cell supplies DC to a DC distribution zone. The turbine driven DC generator supplies the same to the DC distribution zone.

In case of a sudden loss of the load, DC-energy can be directed to a heating spiral in the water in the boiler. This is controlled by automation techniques. Such dumping of electric energy in the boiler will produce steam. In case of surplus steam production, steam can be dumped further in the condenser and thereby energy is released out of the system. Steam to the turbine can be led outside the turbine and directly to the condenser, whereby the production of electricity from the generator is dumped.

In case of sudden need for rapid build-up of necessary electric energy, this can be provided by opening for increased steam flow and additional heating of the boiler by starting the gas burner. Steam for turbine electric energy can be produced in the boiler by:
- heat recovery from the exhaust gas
- additional firing with gas burners
- additional firing with diesel oil burners
- additional firing with other types of burners

Dumped electric energy in the boiler water is not regarded as a way of producing steam to the turbine. This is a way of getting rid of produced energy in emergencies, or in case of a sudden loss of a large energy consumer, or surplus energy as a consequence of a load reduction that is faster than the fuel cell can/should follow up on.

An alternative to dumping surplus electric energy in the boiler is to dump it to an electrolysis unit to produce hydrogen. Hydrogen is then stored to later be used as a fuel in a PEM cell device to produce electric energy. This assembly can be practical to arrange in combination with the fuel cell, as the fuel cell can have a defined minimum capacity below which it should not run. So, in periods where the need for energy is lower than the preferred operating state of the fuel cell, the surplus energy can be led to the electrolysis unit. Later, when the need for energy is greater than the capacity or than the preferred operating state of the fuel cell, the PEM cell can be activated to produce topping-up load energy instead of the steam turbine. This adds redundancy to the system.

Because of the additional system with buffers, converters and dumping devices, the capacity of the whole system can be substantially greater then the capacity of the fuel cell on its own. This makes it possible for the fuel cell to operate at a more or less steady level, and thus, large fuel cells can be applied onboard ships, something that has not been possible previously.

Fuel cells of types other than MCFC can be used. The system can be assembled with any type of fuel cells or converter/fuel cell combination that renders exhaust gases with such a high temperature that it is convenient for heat recovery to steam production, as, for example, SOFC (Solid Oxide Fuel Cell).

The invention is comprised of a system for use of fuel cells in stationary/mobile devices with a stable/unstable load profile, comprising a fuel cell; a buffer for storage of surplus energy, arranged to function as a regulating system between the fuel cell and the energy consumer unit; a dumping device for dumping of energy when the buffer is full; and an energy generator/converter for transforming of the energy stored in the buffer to a desired form of energy, during larger energy needs than the fuel cell can meet, or for transforming of energy which is not used and is to be stored in another form, or for transforming of the energy stored in the buffer which is to be dumped in another form.

The invention is also comprised of a system for use of fuel cells in stationary/mobile devices with a stable/unstable load profile, comprising one or more of the following components: several different/similar fuel cells; several different/similar buffers; several different/similar dumping devices; several different/similar converters; and several different/similar subsystems.

The invention is further comprised of a system for use of fuel cells in stationary/mobile devices with a stable/unstable load profile; where the buffer can be one or several of the following appliances: a pressure boiler with a fluid, a hydrogen tank or other storage unit for hydrogen; or other devices that are known to those skilled in the arts.

The invention is further comprised of a system for use of fuel cells in stationary/mobile devices with a stable/unstable load profile, where the dumping device can, for example, be one or several of the following appliances: a steam exhaust, a condenser; an electric heating element in, for example, water; or other appliances that are known to those skilled in the arts.

The invention is also comprised of a system for use of fuel cells in stationary/mobile devices with a stable/unstable load profile, where the converter can, for example, be one or several of the following appliances; an electrolysis unit; an evaporation unit, a condenser; a turbine; a generator; a gas burner; a PEM cell (Proton Exchange Membrane); a heating element; or other appliances that are known to those skilled in the arts.

Furthermore, the invention is comprised of a system for use of fuel cells in stationary/mobile devices with a stable/unstable load profile, where it is comprised of one or several of the following subsystems: an air-flue gas circuit with turbine/compressor; a steam boiler for heat recovery and additional heating; a steam-condensate circuit with steam turbine; a hydrogen circuit with electrolysis unit; a hydrogen store and PEM cells; a gas circuit with gas store and distribution system; a distribution system for electric energy with turbine driven generator, panels and control system; or other appliances that are known to those skilled in the arts.

The invention is also comprised of a procedure for use of the device for use of fuel cells in stationary/mobile devices with a stable/unstable load profile, where the energy that is produced by the mentioned fuel cell, and which is not used by the mentioned system, is stored in the mentioned buffer; when there is a need by the mentioned system for more energy than the fuel cell can momentarily deliver, energy which is stored in the mentioned buffer is used; the energy which can not/shall be stored in the mentioned buffer is dumped by way of the mentioned dumping device; energy which is required in another form is converted by way of the mentioned converter; energy which is required to be transported to another part of the system is transported by way of the mentioned subsystem: or application of other devices which are known to those skilled in the arts.

It shall be mentioned that the converters to convert energy from the one form to the other can also be used as a dumping device to get rid of surplus energy or unwanted energy.

Systems which are comprised of the invention can be very complex, or simplified versions thereof. The complexity of the system is dependent on intended use and is considered to be technically predetermined.

## Claims

1. System for use of fuel cells in stationary/mobile devices with a stable/unstable load profile, comprising
a) a fuel cell;
b) a buffer for storage of surplus energy, arranged to function as a regulating system between the fuel cell and the energy consumption unit;
***characterised in* that** the system further comprises
c) a dumping device for dumping of energy which is required to be led out of the system when the buffer is full or according to need;
d) an energy generator/converter for transforming the energy stored in the buffer to a required form of energy, at greater energy need than the fuel cell can meet, or for transforming of energy which is not used and which shall be stored in another form, or for transforming of energy stored in the buffer which shall be dumped in another form.

2. System in accordance with claim 1, ***characterised in* that** the system comprises one or several of the following components:
a) several different/similar fuel cells;
b) several different/similar buffers;
c) several different/similar dumping devices;
d) several different/similar converters;
e) several different/similar subsystems.

3. System in accordance with claim 1, ***characterised in* that** the buffer can be one or several of the following devices:
a) a pressure boiler with fluid
b) a hydrogen storage unit with hydrogen.

4. System in accordance with claim 1, ***characterised in* that** the dumping device can be one or several of the following devices:
a) a steam exhaust
b) a condenser
c) an evaporator
d) a heating element

5. System in accordance with claim 1, ***characterised in* that** the converter can be one or several of the following devices:
a) an electrolysis unit
b) a condenser
c) a turbine
d) a generator
e) a gas burner
f) a PEM cell (Proton Exchange Membrane)
g) a heating element
h) an evaporator

6. System in accordance with claim 1, ***characterised in* that** it comprises one or several of the following subsystems:
a) an air-flue gas circuit with turbine/compressor
b) a boiler for heat recovery and additional heating
c) a steam-condensate circuit with steam turbine
d) a hydrogen circuit with electrolysis unit
e) a hydrogen store and PEM cells
f) a gas circuit with gas store and distribution system
g) a distribution system for electric energy with turbine driven generator, panels and control system

7. Method for use of the system in accordance with claim 1,
***characterised in* that**
a) the energy which is produced by said fuel cells, and which is not used by the mentioned system, is stored in said buffer;
b) at the need of said system for more energy than the fuel cell can deliver momentarily, energy that is stored in the mentioned buffer is used;
c) energy which can not be stored in said buffer, or which is required to be removed momentarily, is dumped by way of said dumping device.
d) energy which is required in another form is converted by way of said converter,
e) energy which is required to be transported to another part of the system is transported by way of said subsystem.

## Patentansprüche

1. System zur Verwendung von Brennstoffzellen in stationären/mobilen Anlagen mit einem stabilen/instabilen Lastprofil, umfassend:
a) eine Brennstoffzelle;
b) einen Puffer zum Speichern von Überschussenergie, so angeordnet, dass er als Regulationssystem zwischen der Brennstoffzelle und der Energieverbrauchseinheit funktioniert;
**dadurch gekennzeichnet, dass** das System ferner umfasst
c) eine Dumpingvorrichtung zum Ablegen von Energie, die aus dem System herausgeführt werden soll, wenn der Puffer voll ist oder nach Bedarf;
d) einen Energiegenerator/-konverter zum Transformieren der im Puffer gespeicherten Energie in eine erforderliche Energieform, bei höherem Energiebedarf als eine Brennstoffzelle erfüllen kann, oder zum Transformieren von Energie, die nicht genutzt wird und die in einer anderen Form gespeichert werden soll, oder zum Transformieren von im Puffer gespeicherter Energie, die in einer anderen Form abgelegt werden soll.

2. System nach Anspruch 1, **dadurch gekennzeichnet, dass** das System eine oder mehrere der folgenden Komponenten umfasst:
a) mehrere verschiedene/gleiche Brennstoffzellen;
b) mehrere verschiedene/gleiche Puffer;
c) mehrere verschiedene/gleiche Dumpingvorrichtungen;
d) mehrere verschiedene/gleiche Konverter;
e) mehrere verschiedene/gleiche Untersysteme.

3. System nach Anspruch 1, **dadurch gekennzeichnet, dass** der Puffer eine oder mehrere der folgenden Vorrichtungen sein kann:
a) ein Druckkessel mit Fluid
b) eine Wasserstoffspeichereinheit mit Wasserstoff.

4. System nach Anspruch 1, **dadurch gekennzeichnet, dass** die Dumpingvorrichtung eine oder mehrere der folgenden Vorrichtungen sein kann:
a) ein Dampfauslass
b) ein Kondensator
c) ein Verdampfer
d) ein Erwärmungselement.

5. System nach Anspruch 1, **dadurch gekennzeichnet, dass** der Konverter eine oder mehrere der folgenden Vorrichtungen sein kann:
a) eine Elektrolyseeinheit
b) ein Kondensator
c) eine Turbine
d) ein Generator
e) ein Gasbrenner
f) eine PEM-Zelle (Protonaustauschermembran)
g) ein Erwärmungselement
h) ein Verdampfer.

6. System nach Anspruch 1, **dadurch gekennzeichnet, dass** es eines oder mehrere der folgenden Untersysteme umfasst:
a) einen Luft-Rauchgaskreislauf mit Turbine/Kompressor
b) einen Kessel zur Wärmerückgewinnung und zusätzlichen Erwärmung
c) einen Dampf-Kondensatkreislauf mit Dampfturbine
d) einen Wasserstoffkreislauf mit Elektrolyseeinheit
e) einen Wasserstoffspeicher und PEM-Zellen
f) einen Gaskreislauf mit Gasspeicher und Verteilungssystem
g) ein Verteilungssystem für elektrische Energie mit turbinenbetriebenem Generator, Platten und Steuersystem.

7. Verfahren zur Verwendung des Systems nach Anspruch 1, **dadurch gekennzeichnet, dass**
a) die Energie, die von den Brennstoffzellen erzeugt wird, und die nicht vom genannten System genutzt wird, im Puffer gespeichert wird,
b) bei Bedarf von mehr Energie im System als die Brennstoffzelle momentan liefern kann, die im genannten Puffer gespeicherte Energie verwendet wird,
c) Energie, die nicht im Puffer gespeichert werden kann oder die momentan entfernt werden muss, durch die Dumpingvorrichtung abgelegt wird,
d) Energie, die in einer anderen Form erforderlich ist, durch den Konverter konvertiert wird,
e) Energie, die zu einem anderen Teil des Systems transportiert werden muss, durch das Untersystem transportiert wird.

## Revendications

1. Système pour une utilisation de piles à combustible dans des dispositifs fixes/mobiles ayant un profil de charge stable/instable, comportant
a) une pile à combustible,
b) un tampon pour une accumulation d'énergie excédentaire, agencé pour fonctionner comme un système de régulation entre la pile à combustible et l'unité de consommation d'énergie,
**caractérisé en ce que** le système comporte également
c) un dispositif de décharge pour décharger de l'énergie dont le transport à l'extérieur du système est requis lorsque le tampon est plein ou selon le besoin,
d) un générateur/convertisseur d'énergie pour transformer l'énergie accumulée dans le tampon en une forme d'énergie requise, lors d'un besoin en énergie supérieur à ce que la pile à combustible peut fournir, ou pour transformer de l'énergie qui n'est pas utilisée et qui doit être accumulée sous une autre forme, ou pour transformer de l'énergie accumulée dans le tampon qui doit être déchargée sous une autre forme.

2. Système selon la revendication 1, **caractérisé en ce que** le système comporte un ou plusieurs des éléments suivants :
a) plusieurs piles à combustible différentes/similaires,
b) plusieurs tampons différents/similaires,
c) plusieurs dispositifs de décharge différents/similaires,
d) plusieurs convertisseurs différents/similaires,
e) plusieurs sous-systèmes différents/similaires.

3. Système selon la revendication 1, **caractérisé en ce que** le tampon peut être l'un ou plusieurs des dispositifs suivants :
a) une chaudière sous pression utilisant un fluide,
b) une unité de stockage d'hydrogène utilisant de l'hydrogène.

4. Système selon la revendication 1, **caractérisé en ce que** le dispositif de décharge peut être l'un ou plusieurs des dispositifs suivants :
a) un échappement de vapeur,
b) un condenseur,
c) un évaporateur,
d) un élément de chauffage.

5. Système selon la revendication 1, **caractérisé en ce que** le convertisseur peut être l'un ou plusieurs des dispositifs suivants :
a) une unité d'électrolyse,
b) un condenseur,
c) une turbine,
d) un générateur,
e) un brûleur à gaz,
f) une pile PEM (membrane à échange protonique),
g) un élément de chauffage,
h) un évaporateur.

6. Système selon la revendication 1, **caractérisé en ce qu'**il comporte un ou plusieurs des sous-systèmes suivants :
a) un circuit d'air-gaz effluent ayant une turbine/un compresseur,
b) une chaudière pour une récupération de chaleur et un chauffage supplémentaire,
c) un circuit de vapeur-condensat ayant une turbine à vapeur,
d) un circuit d'hydrogène ayant une unité d'électrolyse,
e) une réserve d'hydrogène et des piles PEM,
f) un circuit de gaz ayant une réserve de gaz et un système de distribution,
g) un système de distribution d'énergie électrique ayant un générateur entraîné par une turbine, des pupitres et un système de commande.

7. Procédé pour une utilisation du système selon la revendication 1, **caractérisé en ce que**
a) l'énergie qui est produite par lesdites piles à combustible, et qui n'est pas utilisée par le système mentionné, est accumulée dans ledit tampon,
b) en cas de besoin dudit système de plus d'énergie que la pile à combustible ne peut en délivrer momentanément, l'énergie qui est accumulée dans le tampon mentionné est utilisée,
c) l'énergie qui ne peut pas être accumulée dans ledit tampon, ou dont le retrait est momentanément requis, est déchargée au moyen dudit dispositif de décharge,
d) l'énergie qui est requise sous une autre forme est convertie au moyen dudit convertisseur,
e) l'énergie dont le transport est requis jusqu'à une autre partie du système, est transportée au moyen dudit sous-système.
